# EUROPEAN PATENT SPECIFICATION

(11) **EP 3 622 358 B1**
(45) Date of publication and mention of the grant of the patent: **25.10.2023**
(21) Application number: 18799047.8
(22) Date of filing: 03.05.2018
(51) Int. Cl.: G05B 13/02, G05B 19/418

(54) **APPARATUS AND METHOD FOR PREDICTIVE TIME-BASED CONTROL OF BATCH OR SEQUENTIAL OPERATIONS**
VORRICHTUNG UND VERFAHREN ZUR PRÄDIKTIVEN ZEITBASIERTEN STEUERUNG VON CHARGEN- ODER SEQUENZOPERATIONEN
APPAREIL ET PROCÉDÉ DE COMMANDE PRÉDICTIVE À BASE DE TEMPS D'OPÉRATIONS PAR LOTS OU SÉQUENTIELLES

(30) Priority: 10.05.2017 US 201715591190
(43) Date of publication of application: 18.03.2020
(73) Proprietor: Honeywell International Inc., Morris Plains, NJ 07950 (US)
(72) Inventor: NIXON, David, Ross, Morris Plains, NJ 07950 (US); NATH, Rahul, C., Morris Plains, NJ 07950 (US); PETERS, Christopher, E., Morris Plains, NJ 07950 (US); KLUS, Marek, Morris Plains, NJ 07950 (US); GRANATELLI, David, Barry, Morris Plains, NJ 07950 (US); ASHLEY, Paul, R., Morris Plains, NJ 07950 (US)
(74) Representative: Houghton, Mark Phillip
(86) International application number: PCT/US2018/030894
(87) International publication number: WO 2018/208575

(56) References cited:
- EP-A2- 2 677 383
- WO-A2-2010/093821
- WO-A2-2016/054605
- JP-A- H0 612 544
- JP-A- 2000 305 616
- US-A- 5 212 635
- US-A- 5 841 656
- US-A1- 2010 057 240
- US-A1- 2014 135 947
- US-A1- 2015 005 906

## Description

### TECHNICAL FIELD

This disclosure relates generally to industrial process control and automation systems. More specifically, this disclosure relates to an apparatus and method for predictive time-based control of batch or sequential operations,

### BACKGROUND

Many types of industrial processes involve sequential operations during the manufacture or production of products. Common examples are found in food and beverage, specialty chemical, and pharmaceutical industries, where discrete steps are typically performed in series on a batch of input materials to create a batch of output product. Sequential operations are also often performed in continuous process industries such as energy production, where pieces of equipment are periodically taken through sequences of operations to start, stop, or clean the equipment or to switch between different pieces of equipment. JP H06 12544 A relates to an operation process of the plant in the plant, relates to a device for a display, is intended to especially propose a useful process prediction device and is applied to the batch plant. WO 2010/093821 A2 relates to manufacturing production environment analysis and more specifically to predicting and analysing production operation status in a manufacturing facility. EP2677383A2 discloses p monitoring system that may include: a storage unit configured to store time-sequence data, which is output from a field device located in a plant for measuring a state quantity, and log data, which includes handing procedures performed in past; a prediction unit configured to predict a time variation of the state quantity by using the time-sequence data output from the field device; and an extraction unit configured to extract the time-sequence data similar to the time variation of the state quantity, which has been predicted by the prediction unit, from the time-sequence data, which has been stored in the storage unit, the extraction unit being configured to extract the handling procedures, which has been performed at a time, when the time-sequence data that has been extracted is obtained, from the log data that has been stored in the storage unit. WO2016054605A2 discloses parallel data streams can indexed and enhanced to high fidelity using any combination of inputs used from any source to analyze the efficiency of a building, configuration of machinery or a business process including aspects involving loT (the Internet of things). Parallel data streams are transformed in realtime into actionable views or exportable formats for machine-based learning or expert analysis.

### SUMMARY

The invention is set out in the amended set of claims. This disclosure provides an apparatus and method for predictive time- based control of batch or sequential operations.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates an example device supporting predictive time-based control of batch or sequential operations according to this disclosure;
FIGURE 3 illustrates an example functional architecture supporting predictive time-based control of batch or sequential operations according to this disclosure;
FIGURE 4 illustrates an example graphical user interface (GUI) for outputting results of predictive time-based control of batch or sequential operations according to this disclosure; and
FIGURE 5 illustrates an example method for predictive time-based control of batch or sequential operations according to this disclosure.

### DETAILED DESCRIPTION

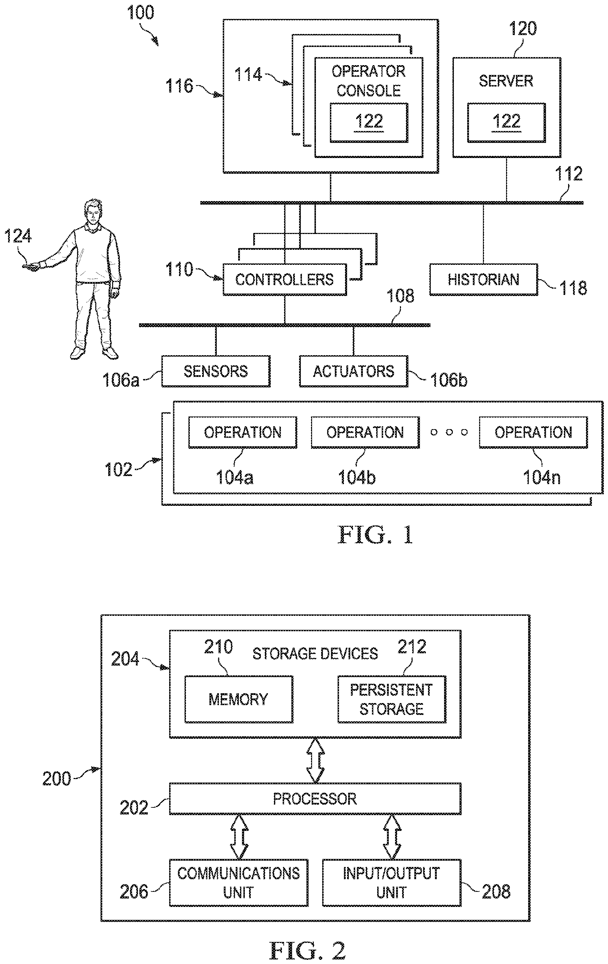

FIGURES 1 through 5, discussed below, and the various embodiments are used to describe the principles of the present invention in this patent document Those skilled in the art will understand that the principles of the invention may be implemented in any type of suitably arranged device or system.

As noted above, many types of industrial processes involve sequential operations, such as during the manufacture or production of products or in continuous process industries. There are a wide variety of automation levels and degrees of human operator involvement in these types of batch or sequential processes. In some cases, sequences of operations are defined outside of a process control system and are performed manually, which could be done according to a documented list of instructions. In other cases, sequences of operations are implemented within a process control system, but periodic interactions with human operators are needed, such as to answer questions or confirm that physical actions have been completed by personnel at various stages. In still other cases, sequences of operations are completely automated. Human operators may only need to know about the sequences to perform various tasks, like starting the sequences, maintaining situation awareness, or responding to unforeseen or problematic situations.

For all of these various levels of automation, operators and other personnel involved in the sequences of operations often need to coordinate their daily tasks and oversight responsibilities with these sequential operations in mind. The times at which questions need to be answered, manual tasks need to be performed, specific equipment needs to be available, or critical process phases need to occur can be important. Any operator delays or distractions at certain times could result in lower plant throughput, equipment damage, or lost product. This challenge is compounded as the scope of responsibility for an operator increases, since the operator has more sequences running in different pieces of equipment with independent demands and timeframes. As a result, the scope of responsibility that an operator can handle without delay and without error is limited because time-based information that the operator needs in order to prepare is non-existent, fragmented, inaccurate, or expensive to engineer.

Conventional approaches often provide little or no useful information about when an operator will need to perform tasks or focus on particular pieces of equipment to support sequences of operations. For example, an operator may only have access to a sequential function chart, which in some cases can be defined according to a standard (such as the ANSI/ISA-88 standard). A sequential function chart is a flowchart that conveys the order of steps in a sequence but not the timing of those steps. In other cases, an application or customized display may attempt to visualize countdowns against "engineered" timing expectations for parts of a sequence. However, this requires additional effort to build and maintain, and it does not incorporate real-world variances that occur, such as those that occur due to changed product formulas or seasonal and equipment variations. An operator could load a historical trend of process data values for a particular "golden" batch of product and use that to estimate the timeline of a current process. However, the selected batch might not be similar to the current sequence, and using process trends for multiple batches can show too much data to clearly highlight upcoming operations in the current sequence and when they will occur. This visual overload problem is also true (or exacerbated) by simply displaying past and current trend data overlaid or beside each other. In addition, existing visualizations of sequences often give only fragmented views of what an operator is responsible for, and they typically focus on one sequence or unit of equipment at a time with only hints at when important events will occur.

This disclosure describes techniques for predictive time-based control of batch or sequential operations. In accordance with this disclosure, appropriate historical timing data from past sequence executions can be identified automatically and used to generate a graphical display. The graphical display, which could take the form of a consolidated Gantt-style chart, shows predictions of when important sequence phases and interactions are expected to occur across multiple units or equipment that an operator is managing or overseeing. Alongside this visualization, planned interactions, messages, or other information could optionally be displayed as a merged "to do" list that concisely lists each important event or action coming up in time order.

In this way, these techniques bring together the information that an operator needs for planning his or her upcoming tasks and focus areas. The operator can accomplish this with little or no additional mental effort and without being distracted away from core control system operational environments. This functionality could also be used in other ways. For example, accurate sequence timing expectation data can be used in the core process control system with no additional engineering to generate ancillary displays. This data could also be used in controller logic and for advanced applications used to perform control optimization or to monitor business key performance indicators (KPIs).

Moreover, organizations today often need to compensate for a lack of distilled timing information by limiting the scope of responsibility for operators and relying on greater operator experience to "fill in the gaps." This is an undesirable strategy because it increases staffing costs and is inherently unreliable. The sustained mental effort required from operators to plan and prepare for their upcoming sequential tasks can become too great to perform indefinitely without error. With the techniques provided in this patent document, an organization can expand its operators' scopes of responsibility and decrease delays and errors that result in lower plant throughput, equipment damage, or lost product, which can impact profitability significantly. These techniques can also be used to train new operators in a faster manner because the experiences required to estimate when actions will occur based on fragmented data is not required, and a clear view of how a sequence will be executed can be presented automatically.

FIGURE 1 illustrates an example industrial process control and automation system 100 according to this disclosure. As shown in FIGURE 1, the system 100 is used in conjunction with at least one industrial process 102, where each industrial process 102 includes a sequence of operations 104a-104n. The control and automation system 100 could be used with any suitable number of industrial processes 102, and each industrial process 102 could include any suitable number of operations 104a-104n.

The industrial processes 102 to be controlled and the sequence of operations 104a-104n in each industrial process 102 can vary widely depending on the application. For example, in die food and beverage industry, the industrial processes 102 can include processes for converting raw materials into different food or beverage items, and the sequences of operations 104a-104n for the processes 102 can vary depending on the food or beverage items being manufactured. In the specialty chemical and pharmaceutical industries, the industrial processes 102 can include processes for converting raw materials into different chemicals or drugs, and the sequences of operations 104a-104n for the processes 102 can vary depending on the chemicals or drugs being manufactured. In continuous process industries such as energy production, the industrial processes 102 can involve specific pieces of equipment, and the sequences of operations 104a-104n for the processes 102 can vary depending on the equipment being used.

The system 100 in this example includes one or more sensors 106a and one or more actuators 106b. The sensors 106a and actuators 106b represent components that may perform any of a wide variety of functions. For example, the sensors 106a could measure a wide variety of characteristics in the industrial processes 102, such as pressure, temperature, or flow rate. Also, the actuators 106b could alter a wide variety of characteristics in the industrial processes 102. Each of the sensors 106a includes any suitable structure for measuring one or more characteristics in at least one industrial process. Each of the actuators 106b includes any suitable structure for operating on or affecting one or more conditions in at least one industrial process.

At least one network 108 is coupled to the sensors 106a and actuators 106b. The network 108 facilitates interaction with the sensors 106a and actuators 106b. For example, the network 108 could transport measurement data from the sensors 106a and provide control signals to the actuators 106b. The network 108 could represent any suitable network or combination of networks. As particular examples, the network 108 could represent at least one Ethernet network, electrical signal network (such as a HART network), pneumatic control signal network, or any other or additional type(s) of network(s).

The system 100 also includes various controllers 110. The controllers 110 can be used in the system 100 to perform various functions in order to control one or more industrial processes. For example, a first set of controllers 110 may use measurements from one or more sensors 106a to control the operation of one or more actuators 106b. A second set of controllers 110 could be used to optimize the control logic or other operations performed by the first set of controllers. A third set of controllers 110 could be used to perform additional functions. The controllers 110 can communicate via one or more networks 112 and associated switches, firewalls, and other components.

Each controller 110 includes any suitable structure for controlling one or more aspects of an industrial process. At least some of the controllers 110 could, for example, represent proportional-integral-derivative (PID) controllers or multivariable controllers, such as controllers implementing model predictive control or other advanced predictive control. As a particular example, each controller 110 could represent a computing device running a real-time operating system, a WINDOWS operating system, or other operating system. However, as noted above, there may be some industrial processes that are not controlled automatically but rather manually, and actuators and controllers may not be needed for those industrial processes.

Operator consoles 114 can be used to provide information to an operator and receive information from an operator. For example, each operator console 114 could provide information identifying a current state of an industrial process to the operator, such as values of various process variables, alarms associated with the industrial process, and tasks to be performed for the industrial process. Each operator console 114 could also receive information from the operator, such as by receiving setpoints or control modes for process variables controlled by the controllers 110 or acknowledgements that certain tasks have been performed. Each operator console 114 includes any suitable structure for displaying information to and interacting with an operator. For instance, each operator console 114 could represent a computing device running a WINDOWS operating system or other operating system.

Multiple operator consoles 114 can be grouped together and used in one or more control rooms 116. Each control room 116 could include any number of operator consoles 114 in any suitable arrangement. In some embodiments, multiple control rooms 116 can be used to control an industrial plant, such as when each control room 116 contains operator consoles 114 used to manage a discrete part of the industrial plant.

The control and automation system 100 here also includes at least one historian 118 and one or more servers 120. The historian 118 represents a component that stores various information about the system 100. The historian 118 could, for instance, store information that is generated by the various controllers 110 during the control of one or more industrial processes. The historian 118 includes any suitable structure for storing and facilitating retrieval of information. Although shown as a single component here, the historian 118 could be located elsewhere in the system 100, or multiple historians could be distributed in different locations in the system 100. Each server 120 denotes a computing device that executes applications for users of the operator consoles 114 or other applications. The applications could be used to support various functions for the operator consoles 114, the controllers 110, or other components of the system 100. Each server 120 could represent a computing device running a WINDOWS operating system or other operating system.

As described in more detail below, at least one component of the system 100 includes or supports a platform 122 for predictive time-based control of batch or sequential operations. The platform 122 uses data associated with current or future batch or sequential operations and stored data related to prior batch or sequential operations in order to make predictions about the timing of the current or future batch or sequential operations. These predictions are used to generate graphical user interfaces (GUIs), which could be presented on display screens of the operator consoles 114, mobile devices 124 used by personnel, or other devices. A GUI can include multiple predictions associated with multiple processes or equipment being managed by an operator, and different GUIs can be tailored for different operators.

Additional details regarding the functionality of die platform 122 are provided below. The platform 122 could be implemented in any suitable manner using hardware or a combination of hardware and software/firmware. For example, the platform 122 could be implemented using software or firmware instructions that are executed by one or more processors of a computing device, such as a desktop, laptop, server, or tablet computer. As a particular example, the platform 122 could be executed by the server 120, the operator consoles 114, or other devices within the system 100 (such as another device coupled to the network 108 or 112 or to another network). The platform 122 could also be implemented outside of die system 100, such as in a remote server, a cloud-based environment, or any other computing system or environment communicatively coupled to the system 100.

Although FIGURE 1 illustrates one example of an industrial process control and automation system 100, various changes may be made to FIGURE 1. For example, the system 100 could include any number of industrial processes, sequences of operations, sensors, actuators, controllers, networks, operator consoles, control rooms, historians, servers, prediction platforms, and other components. Also, the makeup and arrangement of the system 100 in FIGURE 1 is for illustration only. Components could be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, FIGURE 1 illustrates one example operational environment where predictive time-based control of batch or sequential operations can be used. This functionality can be used in any other suitable system.

FIGURE 2 illustrates an example device 200 supporting predictive time-based control of batch or sequential operations according to this disclosure. For ease of explanation, the device 200 may be described as being used in the system 100 to implement the platform 122 of FIGURE 1. The device 200 could, for example, denote an operator console 114 or a server 120 in FIGURE 1. However, the device 200 could be used in any other suitable system, and the platform 122 could be implemented using any other suitable device(s).

As shown in FIGURE 2, the device 200 includes at least one processor 202, at least one storage device 204, at least one communications unit 206, and at least one input/output (I/O) unit 208. Each processor 202 can execute instructions, such as those that may be loaded into a memory 210. The instructions could implement the predictive time-based control functionality described in this patent document. Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 could include a network interface card or a wireless transceiver facilitating communications over a wired or wireless network (such as the network 108 or 112). The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device. Note, however, that the platform 122 could operate in a device that does not require a local I/O unit for data exchange.

Although FIGURE, 2 illustrates one example of a device 200 supporting predictive time-based control of batch or sequential operations, various changes may be made to FIGURE 2. For example, components could be added, omitted, combined, further subdivided, or placed in any other suitable configuration according to particular needs. Also, computing devices can come in a wide variety of configurations, and FIGURE 2 does not limit this disclosure to any particular configuration of computing device.

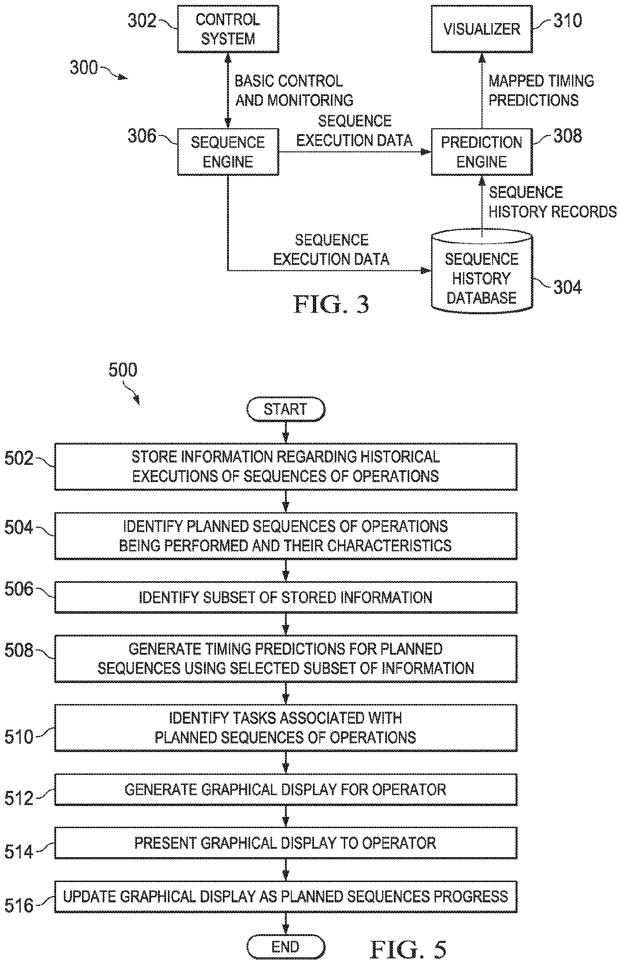

FIGURE 3 illustrates an example functional architecture 300 supporting predictive time-based control of batch or sequential operations according to this disclosure. For ease of explanation, the architecture 300 may be described as being implemented using one or more devices 200 of FIGURE 2 in the system 100 of FIGURE 1. The architecture 300 could, for example, be supported by an operator console 114 or a server 120 in FIGURE 1. However, the architecture 300 could be used by any other suitable device(s) and in any other suitable system.

As shown in FIGURE 3, the architecture 300 is used in conjunction with a control system 302, which could denote the system 100 of FIGURE 1. For example, the architecture 300 can implement the platform 122 for predictive time-based control of batch or sequential operations 104a-104n in industrial processes 102 performed by the control system 302. Any suitable number of industrial processes, each with any suitable number of batch or sequential operations, could be used with the control system 302.

A sequence history database 304 is used in the architecture 300 to collect and store data associated with past executions of the industrial process(es) 102. For example, the sequence history database 304 could store various historical sequence data for a number of past executions of the industrial processes 102. The sequence history database 304 can store any suitable information about prior executions of industrial processes. For example, the information could include batch or other process identifiers, sequence/recipe names, and start/stop/duration times and equipment used for all levels of a sequence (such as is described in a procedural model according to the ANSI/ISA-88 standard). The information could also include timing and information for all operator messages, manual instructions, and formula parameters/sets used during the industrial processes. The information could further include report parameters that describe the results of the industrial processes and a designation of report parameters or an entire record as being desirable by an engineer, manager, or other personnel. In addition, the information could include other data, such as a process history for key parameters of a sequence, but such information may not be needed for some embodiments of this disclosure.

The information in the sequence history database 304 can be used to identify those prior executions that are most similar to a current or future execution of one or more industrial processes 102. The data for those most similar prior executions can be used as described below to make predictions for the current or future execution. The sequence history database 304 may also contain information that identifies "desirable" prior executions or "desirable" traits of prior executions of a process. Report parameters representing results of a prior execution, such as quantity of product produced, quality of product produced, or cycle time of a batch, can be tagged by one or more users as being desirable traits to maximize or minimize. The similar prior executions that are most desirable according to these criteria can be selected for use in predictions of current and future executions. The sequence history database 304 includes any suitable structure configured to store and facilitate retrieval of information, such as one or more hard drives, Flash memories, optical discs, or other data storage devices.

A sequence engine 306 is responsible for managing the execution of sequential operations in the industrial process(es) and could exist in a number of forms and reside on a number of different computers, controllers, or other devices. The sequence engine 306 is also used here to collect information about past, current, and future executions of the industrial process(es) 102. For example, the sequence engine 306 could obtain the data described above for the prior executions of the industrial processes 102 and store that data in the sequence history database 304. The sequence engine 306 could also obtain data regarding the current or planned future execution of the industrial processes 102 and provide that data to the sequence history database 304 for storage and to a prediction engine 308 for use in making predictions about the current or future execution.

Tire sequence engine 306 could obtain the data about the executions of the industrial processes 102 in any suitable manner. For example, the sequence engine 306 could be configured to receive control and monitoring data from the control system 302, parse the received data, and identify desired information in the received data about process executions. The control system 302 could also be configured to provide specific data related to the process executions to the sequence engine 306. The sequence engine 306 includes any suitable logic for identifying information about sequence or batch operations. The sequence engine 306 could, for example, include software or firmware instructions that are executed by the processor 202 of the device 200.

The prediction engine 308 uses information from the sequence history database 304 about prior executions of the industrial process(es) 102 and information from the sequence engine 306 about the current or future execution of the industrial process(es) 102 to make predictions for the current or future execution. For example, the prediction engine 308 can select historical data from the sequence history database 304 and map the selected historical data to a prediction of the current or future execution. The results can then be used to generate graphical displays for one or more users.

The selection of the historical data from the sequence history database 304 by the prediction engine 308 could be done in any suitable manner. For example, the prediction engine 308 could attempt to match as many attributes of stored data as possible (as described in the database description) with the current or future execution. The prediction engine 308 could also give preference to the historical data that has been marked as desirable in the sequence history database 304.

In some cases, there may not be an exact match of current or future execution characteristics with a historical record, such as when altered formula parameters are used or a different unit of equipment is executing an operation. In those cases, the prediction engine 308 could use regression analysis, "deep learning" techniques, or other data processing, mining, or analysis techniques to process multiple records and interpolate or extrapolate predicted timings based on learned patterns in the available prior execution records. Also, if there are several acceptable historical records to choose from and based on a desire to maximize/minimize one or more parameters, the prediction engine 308 selects one or more records based on optimization algorithms that maximize/minimize the parameters (such as by maximizing product yield, minimizing cycle time, or minimizing raw material or energy usage). The prediction engine 308 could further automatically select and combine the best parts of different historical records based on optimization algorithms, such as by choosing different operations from different records because different executions were good in some respects but not others. The prediction engine 308 could use any other or additional logic to select historical data for comparison to a current or future execution.

The prediction engine 308 uses the selected historical data to map timing information of the historical data to a current or future execution, thereby generating timing predictions for the current or future execution The prediction engine 308 matches the names of one or more sequences in the historical records to the names of one or more sequences in the current or future execution. The timing of the sequences in the historical records can then be used to estimate the timing of the sequences in the current or future execution. The prediction engine 308 also performs any translations to different equipment as needed. This may be necessary, for example, if different equipment with different characteristics is currently being used compared to the historical data. As a current execution proceeds, the time predictions are continually updated based on the actual time(s) taken for the current execution. Delays and accelerations are propagated forward through each sequence (such as per an engineered structure of that sequence), incorporating parallel and alternate branches. In addition, unit or other equipment acquisition requirements can be incorporated into predictions, such as by showing and propagating a delay when it is predicted that required equipment will be in use by another sequence of operations.

The prediction engine 308 includes any suitable logic for selecting and using historical information about one or more industrial processes in order to make predictions for a current or future execution of the industrial processes. The prediction engine 308 could, for example, include software or firmware instructions that are executed by the processor 202 of the device 200.

Information is provided from the prediction engine 308 to a visualizer 310, which generates one or more graphical displays for presentation to one or more users. For example, the visualizer 310 could obtain information identifying the actual execution timing of one or more current sequences up to a current time, as well as predicted timings for the one or more current sequences for a future time period. This information could be provided in various forms to operators, such as based on the interfaces being used by the operators. As particular examples, the graphical displays could vary based on whether the operators are using personal computers, tablets, mobile smartphones, smart watches, augmented reality devices, or text streams.

In some embodiments, the presented information in a graphical display uses color, animation, or other indicators to highlight important aspects to operators. For example, certain parts of the future time period could be identified as "busy periods" when an operator will be performing multiple tasks. As another example, certain portions of time could be identified as "slow" periods when an executing sequence is or was running slower than expected. The graphical display can also provide contextual linkage to relevant process data, such as active messages and alarms, process graphics, and sequential function charts for detailed troubleshooting. Drill-down features in the presented graphical display may allow the operator to view timing information for sub-procedures that contribute to the overall timing information and status of an operation or sequence of operations.

The visualizer 310 includes any suitable logic for generating graphical displays and interacting with operators through the graphical displays. The visualizer 310 could, for example, include software or firmware instructions that are executed by the processor 202 of the device 200.

Although FIGURE 3 illustrates one example of a functional architecture 300 supporting predictive time-based control of batch or sequential operations, various changes may be made to FIGURE 3. For example, components could be added, omitted, combined, further subdivided, or placed in any other suitable configuration according to particular needs. As a particular example, the functionalities of the engines 306 and 308 could be combined, or one or both of the engines 306 and 308 could be further subdivided.

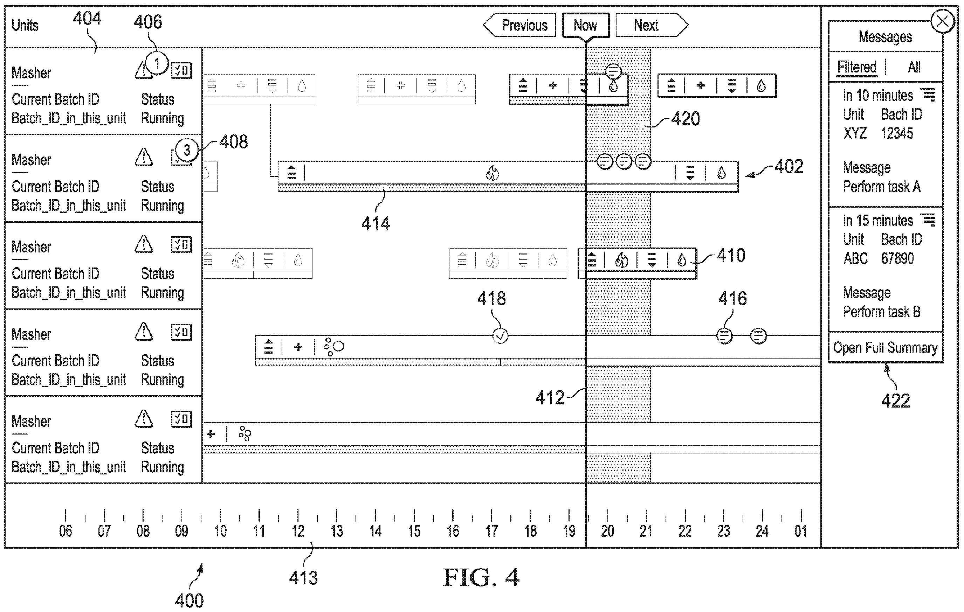

FIGURE 4 illustrates an example GUI 400 for outputting results of predictive time-based control of batch or sequential operations according to this disclosure. The GUI 400 could, for example, be generated by the visualizer 310 based on information from the prediction engine 308 of FIGURE 3. However, the visualizer 310 could generate any other suitable graphical displays for presentation to one or more operators.

As shown in FIGURE 4, the GUI 400 includes a Gantt-style chart that identifies the current status of multiple industrial processes 102. Here, the GUI 400 includes a number of rows 402. The rows 402 are associated with different units or other equipment that performs the industrial processes 102 being monitored or controlled by an operator. Each row 402 includes a label 404, which identifies a name of the equipment and related information (such as a current process identifier and a current process status). Each label 404 is associated with an indicator 406 identifying whether there are any alarms, warnings, or other problems associated with the corresponding equipment. Each label 404 is also associated with an indicator 408 identifying whether one or more tasks, messages, or manual interactions are approaching or are identified in the operator's "to do" list (which is described in more detail below).

The rows 402 also include various icons 410, and a current time indicator 412 identifies a current time along a time scale 413. The icons 410 are visual indicators identifying the operations that have been, are being, or will be performed by equipment in the various sequences monitored or controlled by the operator. In this example, the icons 410 graphically represent different operations in the sequences, although other types of indicators could also be used. Icons 410 to the left of the current time indicator 412 represent operations that have been completed, icons 410 on the current time indicator 412 represent operations that are currently being performed, and icons 410 to the right of the current time indicator 412 represent operations to be performed in the future. The icons 410 could be modified in various ways to provide status information about the associated sequences. For instance, icons 410 in uncompleted sequences could be brighter, have one color (like white), or identified in other ways. Icons 410 in completed sequences could be dimmer, have another color (like grey), or identified in other ways.

The rows 402 further include bars 414 that identify actual and predicted execution times for the industrial processes. For example, the lengths of the bars 414 to the left of the current time indicator 412 identify the lengths of time that the currently executing processes have actually been executing. The lengths of the bars 414 to the right of the current time indicator 412 identify the lengths of time that the currently executing processes are predicted to require for completion (based on the predictions by the prediction engine 308). As the processes continue to execute, the current time indicator 412 could move or the bars 414 can slide to the left in order to update the predictions or completion statuses of the operations. The lengths of the bars 414 to the left of the current time indicator 412 can be updated to account for actual execution times, and the lengths of the bars 414 to the right of the current time indicator 412 can be altered to account for updated predictions.

The bars 414 can also be colored-coded or use other indicators to identify different periods of time. For example, the bars 414 to the left of the current time indicator 412 could use one color (such as green) when the actual times needed to perform various operations were within the predicted times forthose operations. The bars 414 to the left of the current time indicator 412 could use another color (such as yellow) when the actual times needed to perform various operations were excessive but within some threshold of the predicted times for those operations. The bars 414 to the left of the current time indicator 412 could use a third color (such as red) when the actual times needed to perform various operations were excessive and outside the threshold of the predicted times for those operations. Thus, the colors of the bars 414 (or other indicators) could be used to identify periods of slowness of the operations in the industrial processes compared to the predictions. If needed, controls or other information could be provided for the slow periods to help the operator complete those operations.

Various indicators 416-418 can be placed along the bars 414. The indicators 416 represent messages or upcoming tasks that are to be performed by the operator or by other personnel. The indicators 418 represent tasks that have been performed or that should have been performed by the operator or other personnel. These tasks could represent manual actions to be performed during execution of the industrial processes. As described above, batch or sequential processes can include varying degrees of automation, and some tasks can be performed manually by operators or other personnel. Example tasks could include manually adjusting a valve or manually capturing a sample of material from a tank.

The indicators 416 help to inform an operator of upcoming actions to be performed. Looking to the right of the current time indicator 412, highlighting 420 or other indicator could be used to identify upcoming time periods where at least a specified number of indicators 416 is present within some threshold amount of time. These time periods represent "busy" periods when the operator will be performing multiple actions. Looking to the left of the current time indicator 412, indicators 418 for tasks that have been performed could have one form, such as a circled checkmark. In contrast, indicators 418 for tasks that should have been (but were not) performed could have another form, such as a circled X.

A "to do" list 422 can optionally be presented to the operator in the GUI 400. The list 422 includes messages or other information to be read by the operator. The messages can identify currently active or predicted future tasks or other actions to be performed by the operator or by other personnel. The identified actions could include those tasks identified by the indicators 416-418. The messages can also identify alerts, warnings, or other notifications generated for the equipment being monitored or controlled by the operator. In some embodiments, the list 422 could be hidden by the user and represented when needed, such as when the user selects one of the indicators 408, 416, or 418 in the rows 402.

Because the bars 414 can slide left-to-right in FIGURE 4, the GUI 400 can provide continuous or near-continuous updates regarding the time predictions for multiple sequences of operations being monitored or controlled by an operator. The operator is able to see actual times required for various operations in the past, as well as indications of whether those actual times were within or exceeded the predictions for those operations. The operator is also able to see to current operations being executed and timing predictions in the future for the current operations and for future operations. Further, the operator is able to see what tasks are upcoming and when (using the indicators 416) and what tasks have been completed or are overdue (using the indicators 418). In addition, the operator can use the list 422 to obtain additional information, such as about upcoming or overdue tasks.

In this way, the GUI 400 effectively provides information that an operator needs for planning his or her upcoming tasks and focus areas. The operator can easily view the current statuses of multiple processes, as well as prior behaviors and future predictions. The operator can also plan more effectively for performing specific tasks. This enables more effective control of the processes. The GUI 400 therefore supports an intelligent way to use data (such as timing predictions versus actual executions) and upcoming tasks to compress very complicated procedural hierarchies into single lines so an operator can see and control much more equipment and sequences of operations.

Although FIGURE 4 illustrates one example of a GUI 400 for outputting results of predictive time-based control of batch or sequential operations, various changes may be made to FIGURE 4. For example, the contents, layout, and arrangement of the GUI 400 could vary as needed or desired.

FIGURE 5 illustrates an example method 500 for predictive time-based control of batch or sequential operations according to this disclosure. For ease of explanation, the method 500 may be described as using one or more devices 200 of FIGURE 2 in die system 100 of FIGURE 1 to implement the architecture 300 of FIGURE 3. However, the method 500 could be performed using any other suitable architectures and devices and in any other suitable system.

As shown in FIGURE 5, information regarding historical executions of one or more sequences of operations is stored at step 502. This could include, for example, the processor 202 executing the sequence engine 306 to collect data from the control system 302 or other source(s) of information and store the data in the sequence history database 304. The information could include any suitable information, such as the equipment used in the prior executions, the recipes or formulas used to process materials, the actual timings of the operations in the prior executions, and other information as described above. This could also include the processor 202 receiving indications from one or more users that certain parts of the collected information are more or less desirable, such as by receiving indications that particular prior executions of certain sequences are desirable.

One or more planned sequences of operations and their characteristics are identified at step 504. This could include, for example, the processor 202 executing the sequence engine 306 to identify one or more current sequences of operations being performed by the control system 302 and/or one or more planned sequences of operations to be performed by the control system 302 in the near future. This could also include the sequence engine 306 identifying various features of the planned sequences of operations, such as the equipment to be used and the recipes or formulas to be implemented.

A subset of the stored information is identified at step 506. This could include, for example, the processor 202 executing the prediction engine 308 to access the sequence history database 304 and identify the prior sequences of operations that are most similar to the planned sequences of operations. As noted above, the processor 202 could match as many attributes of a historical sequence to a current or future sequence, possibly giving preference to historical data identified as being more desirable. If no exact match is found, regression analysis, deep learning techniques, or other data processing, mining, or analysis techniques could be used to interpolate the historical data. Optimization could also be used to maximize or minimize one or more parameters.

Timing predictions for the planned sequences of operations are identified using the selected subset of information at step 508. This could include, for example, the processor 202 executing the prediction engine 308 to map the timings contained in the historical data (or generated via interpolation or other processing) onto the planned sequences of operations. Various tasks associated with the planned sequences of operations are identified at step 510. This could include, for example, the processor 202 executing the prediction engine 308 to identify the tasks to be performed by an operator or other personnel during the planned sequences of operations.

A graphical display is generated for the operator at step 510 and presented to the operator at step 512. This could include, for example, the processor 202 executing the visualizer 310 to receive the timing predictions and the identified tasks. This could also include the visualizer 310 generating a GUI 400 with one or more rows 402 for each planned sequence of operations. Each row 402 could include one or more of the timing predictions.

The graphical display is updated as the planned sequences of operations progress through their executions at step 514. This could include, for example, the processor 202 executing the visualizer 310 to move the current time indicator 412 or shift the bars 414 in the GUI 400 to the left as the planned sequences of operations progress. This could also include the visualizer 310 changing the colors or other indicators of the bars 414 to identify sequences or portions thereof that were or are slower than predicted.

Although FIGURE 5 illustrates one example of a method 500 for predictive time-based control of batch or sequential operations, various changes may be made to FIGURE 5. For example, while shown as a series of steps, various steps in FIGURE 5 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and and phrases used throughout this patent document. The terms "application" and "program." refer to one or more computer programs, software components, sets of instructions, procedures, functions, objects, classes, instances, related data, or a portion thereof adapted for implementation in a suitable computer code (including source code, object code, or executable code). The terra "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

## Claims

1. A method comprising:
identifying (504) multiple planned sequences of operations (104a-104n) involving industrial equipment, the planned sequences of operations comprising at least one of: one or more sequences of operations currently being performed using the industrial equipment and one or more sequences of operations to be performed using the industrial equipment;
identifying (506) information associated with prior executions of the sequences of operations, the information including timing information associated with the prior executions of the sequences of operations;
identifying whether any of the prior executions of the sequences of operations have characteristics that match characteristics of the planned sequences of operations;
identifying information associated with the prior executions of the sequences of operations that have the characteristics that match the characteristics of the planned sequences of operations;
**characterised by**
selecting the identified information that if used maximizes or minimizes one or more parameters related to the planned sequences of operations if multiple prior executions of the sequences of operations have the characteristics that match the characteristics of the planned sequences of operations;
generating (508) timing predictions for operations in the planned sequences of operations using the identified information, by matching the names of one or more sequences in historical records to the names of the one or more sequences currently being performed or in future execution, the matching including translations to different equipment if industrial equipment with different characteristics is currently being used compared to the historical data; and
generating (512) an interface (400) for presentation to an operator, the interface identifying the planned sequences of operations and the timing predictions for the operations in the planned sequences of operations.

2. The method of Claim 1, further comprising:
updating (514) the interface as executions of the planned sequences of operations progress over time.

3. The method of Claim 1, wherein the interface comprises:
an indicator (412) identifying a current time;
multiple rows (402) associated with different industrial equipment, the rows including visual indicators (410) representing operations in the planned sequences of operations; and
multiple bars (414) that identify (i) actual times required to perform completed operations in the planned sequences of operations and (ii) predicted times estimated to perform current or future operations in the planned sequences of operations.

4. The method of Claim 3, wherein portions of the bars are coded to identify different periods, the periods including:
periods when the actual times required to perform the completed operations were within predictions for those operations;
periods when the actual times required to perform the completed operations exceeded the predictions for those operations but were within a threshold of the predictions; and
periods when the actual times required to perform the completed operations exceeded the predictions for those operations and were outside the threshold of the predictions.

5. The method of Claim 3, wherein the interface further comprises indicators (416, 418) that identify at least one of:
one or more upcoming messages or tasks to be performed during the planned sequences of operations; and
one or more tasks that were or should have been performed during the planned sequences of operations.

6. The method of Claim 5, wherein the interface further comprises a list (422) of tasks to be completed by the operator.

7. An apparatus comprising:
at least one memory (204, 210, 212); and
at least one processing device (202) configured to:
identify multiple planned sequences of operations (104a-104n) involving industrial equipment, the planned sequences of operations comprising at least one of: one or more sequences of operations currently being performed using the industrial equipment and one or more sequences of operations to be performed using the industrial equipment;
identify information associated with prior executions of the sequences of operations stored in the at least one memory, the information including timing information associated with the prior executions of the sequences of operations,
wherein, to identify the information associated with the prior executions of the sequences of operations, the at least one processing device is further configured to:
identify whether any of the prior executions of the sequences of operations have characteristics that match characteristics of the planned sequences of operations; and
identify information associated with the prior executions of the sequences of operations that have the characteristics that match the characteristics of the planned sequences of operations;
wherein the at least one processing device (202) is **characterised by** being further configured to:
select the identified information that if used maximizes or minimizes one or more parameters related to the planned sequences of operations if multiple prior executions of the sequences of operations have the characteristics that match the characteristics of the planned sequences of operations;
generate timing predictions for operations in the planned sequences of operations using the identified information, by matching the names of one or more sequences in historical records to the names of the one or more sequences currently being performed or in future execution, the matching including translations to different equipment if industrial equipment with different characteristics is currently being used compared to the historical data; and
generate an interface (400) for presentation to an operator, the interface identifying the planned sequences of operations and the timing predictions for the operations in the planned sequences of operations.

8. The apparatus of Claim 7, wherein the at least one processing device is further configured to update the interface as executions of the planned sequences of operations progress over time.

9. The apparatus of Claim 7, wherein the at least one processing device is configured, when no prior executions of the sequences of operations have the characteristics that match the characteristics of the planned sequences of operations, to estimate predicted timings based on at least some of the prior executions of the sequences of operations.

10. The apparatus of Claim 7, wherein the interface comprises:
an indicator (412) identifying a current time;
multiple rows (402) associated with different industrial equipment, the rows including visual indicators (410) representing operations in the planned sequences of operations; and
multiple bars (414) that identify (i) actual times required to perform completed operations in the planned sequences of operations and (ii) predicted times estimated to perform current or future operations in the planned sequences of operations.

11. The apparatus of Claim 10, wherein the interface further comprises indicators (416, 418) that identify at least one of:
one or more upcoming messages or tasks to be performed during the planned sequences of operations; and
one or more tasks that were or should have been performed during the planned sequences of operations.

12. A non-transitory computer readable medium containing instructions that when executed cause at least one processor to perform the method of any of Claims 1-6.

13. The non-transitory computer readable medium of Claim 12, wherein the interface comprises one of:
an interface displayed on a computer;
an interface displayed on a tablet;
an interface displayed on a smartphone;
an interface displayed on a watch;
an interface displayed on an augmented reality device; and
a text stream.

## Patentansprüche

1. Verfahren, umfassend:
Identifizieren (504) mehrerer geplanter Sequenzen von Vorgängen (104a-104n), an denen Industrieausrüstung beteiligt ist, wobei die geplanten Sequenzen von Vorgängen mindestens eines umfassen von: einer oder mehreren Sequenzen von Vorgängen, die aktuell unter Verwendung der Industrieausrüstung ausgeführt werden, und eine oder mehrere Sequenzen von Vorgängen, die unter Verwendung der Industrieausrüstung ausgeführt werden sollen;
Identifizieren (506) von Informationen, die früheren Ausführungen der Sequenzen von Vorgängen zugeordnet sind, wobei die Informationen Zeitplanungsinformationen einschließen, die den früheren Ausführungen der Sequenzen von Vorgängen zugeordnet sind;
Identifizieren, ob eine der früheren Ausführungen der Sequenzen von Vorgängen Eigenschaften aufweist, die mit den Eigenschaften der geplanten Sequenzen von Vorgängen abgestimmt sind;
Identifizieren von Informationen, die früheren Ausführungen der Sequenzen von Vorgängen zugeordnet sind, die die Eigenschaften aufweisen, die mit den Eigenschaften der geplanten Sequenzen von Vorgängen abgestimmt sind;
**gekennzeichnet durch**
Auswählen der identifizierten Informationen, die, wenn sie verwendet werden, einen oder mehrere Parameter im Zusammenhang mit den geplanten Sequenzen von Vorgängen maximieren oder minimieren, wenn mehrere frühere Ausführungen der Sequenzen von Vorgängen die Eigenschaften aufweisen, die mit den Eigenschaften der geplanten Sequenzen von Vorgängen abgestimmt sind;
Erzeugen (508) von Zeitplanungsvorhersagen für Vorgänge in den geplanten Sequenzen von Vorgängen unter Verwendung der identifizierten Informationen, durch Abstimmen der Namen einer oder mehrerer Sequenzen in historischen Aufzeichnungen mit den Namen der einen oder mehreren Sequenzen, die aktuell ausgeführt werden, oder bei zukünftiger Ausführung, das Abstimmen einschließlich Übersetzungen für unterschiedliche Ausrüstungen, wenn aktuell Industrieausrüstungen mit unterschiedlichen Eigenschaften im Vergleich zu den historischen Daten verwendet werden; und
Erzeugen (512) einer Oberfläche (400) zur Präsentation für einen Bediener, wobei die Oberfläche die geplanten Sequenzen von Vorgängen und die Zeitplanungsvorhersagen für die Vorgänge in den geplanten Sequenzen von Vorgängen identifiziert.

2. Verfahren nach Anspruch 1, ferner umfassend:
Aktualisieren (514) der Oberfläche, wenn Ausführungen der geplanten Sequenzen von Vorgängen im Laufe der Zeit fortschreiten.

3. Verfahren nach Anspruch 1, wobei die Oberfläche umfasst:
einen Indikator (412), der eine aktuelle Zeit identifiziert;
mehrere Zeilen (402), die verschiedenen Industrieausrüstungen zugeordnet sind, wobei die Zeilen visuelle Indikatoren (410) einschließen, die Vorgänge in den geplanten Sequenzen von Vorgängen darstellen; und
mehrere Balken (414), die (i) tatsächliche Zeiten identifizieren, die erforderlich sind, um abgeschlossene Vorgänge in den geplanten Sequenzen von Vorgängen auszuführen, und (ii) vorhergesagte Zeiten, die geschätzt werden, um aktuelle oder zukünftige Vorgänge in den geplanten Sequenzen von Vorgängen auszuführen.

4. Verfahren nach Anspruch 3, wobei Teile der Balken codiert sind, um unterschiedliche Zeiträume zu identifizieren, wobei die Zeiträume einschließen:
Zeiträume, in denen die tatsächlich für die Durchführung der abgeschlossenen Vorgänge erforderlichen Zeiten innerhalb der Vorhersagen für diese Vorgänge lagen;
Zeiträume, in denen die tatsächlich für die Durchführung der abgeschlossenen Vorgänge erforderlichen Zeiten die Vorhersagen für diese Vorgänge überschritten, aber innerhalb eines Schwellenwerts der Vorhersagen lagen; und
Zeiträume, in denen die tatsächlich für die Durchführung der abgeschlossenen Vorgänge erforderlichen Zeiten die Vorhersagen für diese Vorgänge überschritten, und außerhalb des Schwellenwerts der Vorhersagen lagen.

5. Verfahren nach Anspruch 3, wobei die Oberfläche ferner Indikatoren (416, 418) umfasst, die mindestens eines identifizieren von:
einer oder mehreren anstehenden Nachrichten oder Aufgaben, die während der geplanten Sequenzen von Vorgängen ausgeführt werden sollen; und
eine oder mehrere Aufgaben, die während der geplanten Sequenzen von Vorgängen ausgeführt wurden oder hätten ausgeführt werden sollen.

6. Verfahren nach Anspruch 5, wobei die Oberfläche ferner eine Liste (422) von Aufgaben umfasst, die durch den Bediener abgeschlossen werden sollen.

7. Vorrichtung, umfassend:
mindestens einen Speicher (204, 210, 212); und
mindestens eine Verarbeitungsvorrichtung (202), die konfiguriert ist zum:
Identifizieren mehrerer geplanter Sequenzen von Vorgängen (104a-104n), an denen Industrieausrüstung beteiligt ist, wobei die geplanten Sequenzen von Vorgängen mindestens eines umfassen von: einer oder mehreren Sequenzen von Vorgängen, die aktuell unter Verwendung der Industrieausrüstung ausgeführt werden, und eine oder mehrere Sequenzen von Vorgängen, die unter Verwendung der Industrieausrüstung ausgeführt werden sollen;
Identifizieren von Informationen, die früheren Ausführungen der Sequenzen von Vorgängen zugeordnet sind, die in mindestens einem Speicher gespeichert sind, wobei die Informationen Zeitplanungsinformationen einschließen, die den vorherigen Ausführungen der Sequenzen von Vorgängen zugeordnet sind,
wobei zum Identifizieren der Informationen, die den früheren Ausführungen der Sequenzen von Vorgängen zugeordnet sind, die mindestens eine Verarbeitungsvorrichtung ferner konfiguriert ist zum:
Identifizieren, ob eine der früheren Ausführungen der Sequenzen von Vorgängen Eigenschaften aufweist, die mit den Eigenschaften der geplanten Sequenzen von Vorgängen übereinstimmen; und
Identifizieren von Informationen, die früheren Ausführungen der Sequenzen von Vorgängen zugeordnet sind, die die Eigenschaften aufweisen, die mit den Eigenschaften der geplanten Sequenzen von Vorgängen abgestimmt sind;
wobei die mindestens eine Verarbeitungsvorrichtung (202) **dadurch gekennzeichnet ist, dass** sie ferner konfiguriert ist zum:
Auswählen der identifizierten Informationen, die, wenn sie verwendet werden, einen oder mehrere Parameter im Zusammenhang mit den geplanten Sequenzen von Vorgängen maximieren oder minimieren, wenn mehrere frühere Ausführungen der Sequenzen von Vorgängen die Eigenschaften aufweisen, die mit den Eigenschaften der geplanten Sequenzen von Vorgängen abgestimmt sind;
Erzeugen von Zeitplanungsvorhersagen für Vorgänge in den geplanten Sequenzen von Vorgängen unter Verwendung der identifizierten Informationen, durch Abstimmen der Namen einer oder mehrerer Sequenzen in historischen Aufzeichnungen mit den Namen der einen oder mehreren Sequenzen, die aktuell ausgeführt werden, oder bei zukünftiger Ausführung, das Abstimmen einschließlich Übersetzungen für unterschiedliche Ausrüstungen, wenn aktuell Industrieausrüstungen mit unterschiedlichen Eigenschaften im Vergleich zu den historischen Daten verwendet werden; und
Erzeugen einer Oberfläche (400) zur Präsentation für einen Bediener, wobei die Oberfläche die geplanten Sequenzen von Vorgängen und die Zeitplanungsvorhersagen für die Vorgänge in den geplanten Sequenzen von Vorgängen identifiziert.

8. Vorrichtung nach Anspruch 7, wobei die mindestens eine Verarbeitungsvorrichtung ferner konfiguriert ist zum Aktualisieren der Oberfläche, wenn Ausführungen der geplanten Sequenzen von Vorgängen im Laufe der Zeit fortschreiten.

9. Vorrichtung nach Anspruch 7, wobei die mindestens eine Verarbeitungsvorrichtung, wenn keine vorherigen Ausführungen der Sequenzen von Vorgängen die Eigenschaften aufweist, die mit den Eigenschaften der geplanten Sequenzen von Vorgängen abgestimmt sind, konfiguriert ist zum Schätzen vorhergesagter Zeitplanungen basierend auf mindestens einigen der vorherigen Ausführungen der Sequenzen von Vorgängen.

10. Vorrichtung nach Anspruch 7, wobei die Oberfläche umfasst:
einen Indikator (412), der eine aktuelle Zeit identifiziert;
mehrere Zeilen (402), die verschiedenen Industrieausrüstungen zugeordnet sind, wobei die Zeilen visuelle Indikatoren (410) einschließen, die Vorgänge in den geplanten Sequenzen von Vorgängen darstellen; und
mehrere Balken (414), die (i) tatsächliche Zeiten identifizieren, die erforderlich sind, um abgeschlossene Vorgänge in den geplanten Sequenzen von Vorgängen auszuführen, und (ii) vorhergesagte Zeiten, die geschätzt werden, um aktuelle oder zukünftige Vorgänge in den geplanten Sequenzen von Vorgängen auszuführen.

11. Vorrichtung nach Anspruch 10, wobei die Oberfläche ferner Indikatoren (416, 418) umfasst, die mindestens eines identifizieren von:
einer oder mehreren anstehenden Nachrichten oder Aufgaben, die während der geplanten Sequenzen von Vorgängen ausgeführt werden sollen; und
eine oder mehrere Aufgaben, die während der geplanten Sequenzen von Vorgängen ausgeführt wurden oder hätten ausgeführt werden sollen.

12. Nicht transitorisches computerlesbares Medium, das Anweisungen enthält, die bei Ausführung mindestens einen Prozessor veranlassen, das Verfahren nach einem der Ansprüche 1-6 auszuführen.

13. Nicht transitorisches computerlesbares Medium nach Anspruch 12, wobei die Oberfläche eines umfasst von:
einer auf einem Computer angezeigten Oberfläche;
einer auf einem Tablet angezeigten Oberfläche;
einer auf einem Smartphone angezeigten Oberfläche;
einer auf einer Uhr angezeigten Oberfläche;
einer auf einer Augmented-Reality-Vorrichtung angezeigten Oberfläche; und
einem Textstrom.

## Revendications

1. Procédé comprenant :
l'identification (504) de plusieurs séquences d'opérations (104a-104n) planifiées impliquant un équipement industriel, les séquences d'opérations planifiées comprenant au moins un élément parmi : une ou plusieurs séquences d'opérations actuellement réalisées à l'aide de l'équipement industriel et une ou plusieurs séquences d'opérations devant être réalisées à l'aide de l'équipement industriel ;
l'identification (506) d'informations associées à des exécutions antérieures des séquences d'opérations, les informations comprenant des informations temporelles associées aux exécutions antérieures des séquences d'opérations ;
l'identification pour savoir si l'une quelconque des exécutions antérieures des séquences d'opérations a des caractéristiques qui correspondent aux caractéristiques des séquences d'opérations planifiées ;
l'identification d'informations associées aux exécutions antérieures des séquences d'opérations qui présentent les caractéristiques qui correspondent aux caractéristiques des séquences d'opérations planifiées ;
**caractérisé par**
la sélection des informations identifiées qui, si elles sont utilisées, maximisent ou minimisent un ou plusieurs paramètres liés aux séquences d'opérations planifiées si plusieurs exécutions antérieures des séquences d'opérations présentent les caractéristiques qui correspondent aux caractéristiques des séquences d'opérations planifiées ;
la génération (508) de prédictions temporelles pour des opérations dans les séquences d'opérations planifiées à l'aide des informations identifiées, en faisant correspondre les noms d'une ou de plusieurs séquences dans des enregistrements historiques avec les noms de la ou des séquences en cours de réalisation ou destinées à une exécution future, la mise en correspondance comprenant les traductions vers différents équipements si un équipement industriel aux caractéristiques différentes est actuellement utilisé par rapport aux données historiques ; et
la génération (512) d'une interface (400) pour présentation à un opérateur, l'interface identifiant les séquences d'opérations planifiées et les prédictions temporelles pour les opérations dans les séquences d'opérations planifiées.

2. Procédé selon la revendication 1, comprenant en outre :
la mise à jour (514) de l'interface au fur et à mesure que des exécutions des séquences d'opérations planifiées progressent dans le temps.

3. Procédé selon la revendication 1, dans lequel l'interface comprend :
un indicateur (412) identifiant une heure actuelle ;
plusieurs rangées (402) associées à différents équipements industriels, les rangées comprenant des indicateurs visuels (410) représentant des opérations dans les séquences d'opérations planifiées ; et
de multiples barres (414) qui identifient (i) les temps réels requis pour réaliser des opérations terminées dans les séquences d'opérations planifiées et (ii) les temps prédits estimés pour réaliser des opérations actuelles ou futures dans les séquences d'opérations planifiées.

4. Procédé selon la revendication 3, dans lequel des parties des barres sont codées pour identifier différentes périodes, les périodes comprenant :
des périodes pendant lesquelles les temps réels requis pour réaliser les opérations terminées se situaient dans les prévisions pour ces opérations ;
des périodes pendant lesquelles les temps réels requis pour réaliser les opérations terminées dépassaient les prévisions pour ces opérations mais se situaient dans un seuil des prévisions ; et
des périodes pendant lesquelles les temps réels requis pour réaliser les opérations terminées dépassaient les prévisions pour ces opérations et étaient en dehors du seuil des prévisions.

5. Procédé selon la revendication 3, dans lequel l'interface comprend en outre des indicateurs (416, 418) qui identifient au moins un élément parmi :
un ou plusieurs messages ou tâches à venir à réaliser pendant les séquences d'opérations planifiées ; et
une ou plusieurs tâches qui ont été ou auraient dû être réalisées au cours des séquences d'opérations planifiées.

6. Procédé selon la revendication 5, dans lequel l'interface comprend en outre une liste (422) de tâches devant être terminées par l'opérateur.

7. Appareil comprenant :
au moins une mémoire (204, 210, 212) ; et
au moins un dispositif de traitement (202) configuré pour :
identifier plusieurs séquences d'opérations (104a-104n) planifiées impliquant un équipement industriel, les séquences d'opérations planifiées comprenant au moins un élément parmi : une ou plusieurs séquences d'opérations actuellement réalisées à l'aide de l'équipement industriel et une ou plusieurs séquences d'opérations devant être réalisées à l'aide de l'équipement industriel ;
identifier des informations associées à des exécutions antérieures des séquences d'opérations stockées dans l'au moins une mémoire, les informations comprenant des informations temporelles associées aux exécutions antérieures des séquences d'opérations,
dans lequel, pour identifier les informations associées aux exécutions antérieures des séquences d'opérations, l'au moins un dispositif de traitement est en outre configuré pour :
identifier si l'une quelconque des exécutions antérieures des séquences d'opérations a des caractéristiques qui correspondent aux caractéristiques des séquences d'opérations planifiées ; et
identifier des informations associées aux exécutions antérieures des séquences d'opérations qui présentent les caractéristiques qui correspondent aux caractéristiques des séquences d'opérations planifiées ;
dans lequel l'au moins un dispositif de traitement (202) est **caractérisé en ce qu'**il est en outre configuré pour :
sélectionner les informations identifiées qui, si elles sont utilisées, maximisent ou minimisent un ou plusieurs paramètres liés aux séquences d'opérations planifiées si plusieurs exécutions antérieures des séquences d'opérations présentent les caractéristiques qui correspondent aux caractéristiques des séquences d'opérations planifiées ;
générer des prédictions temporelles pour des opérations dans les séquences d'opérations planifiées à l'aide des informations identifiées, en faisant correspondre les noms d'une ou de plusieurs séquences dans des enregistrements historiques avec les noms d'une ou de plusieurs séquences en cours de réalisation ou destinées à une exécution future, la mise en correspondance comprenant les traductions vers différents équipements si un équipement industriel aux caractéristiques différentes est actuellement utilisé par rapport aux données historiques ; et
générer une interface (400) pour une présentation à un opérateur, l'interface identifiant les séquences d'opérations planifiées et les prédictions temporelles pour les opérations dans les séquences d'opérations planifiées.

8. Appareil selon la revendication 7, dans lequel l'au moins un dispositif de traitement est en outre configuré pour mettre à jour l'interface à mesure que les exécutions des séquences d'opérations planifiées progressent dans le temps.

9. Appareil selon la revendication 7, dans lequel l'au moins un dispositif de traitement est configuré, lorsqu'aucune exécution antérieure des séquences d'opérations n'a les caractéristiques qui correspondent aux caractéristiques des séquences d'opérations planifiées, pour estimer des cadencements prédits sur la base d'au moins certaines des exécutions antérieures des séquences d'opérations.

10. Appareil selon la revendication 7, dans lequel l'interface comprend :
un indicateur (412) identifiant une heure actuelle ;
plusieurs rangées (402) associées à différents équipements industriels, les rangées comprenant des indicateurs visuels (410) représentant des opérations dans les séquences d'opérations planifiées ; et
de multiples barres (414) qui identifient (i) les temps réels requis pour réaliser des opérations terminées dans les séquences d'opérations planifiées et (ii) les temps prédits estimés pour réaliser des opérations actuelles ou futures dans les séquences d'opérations planifiées.

11. Appareil selon la revendication 10, dans lequel l'interface comprend en outre des indicateurs (416, 418) qui identifient au moins un élément parmi :
un ou plusieurs messages ou tâches à venir à réaliser pendant les séquences d'opérations planifiées ; et
une ou plusieurs tâches qui ont été ou auraient dû être réalisées au cours des séquences d'opérations planifiées.

12. Support non transitoire lisible par ordinateur contenant des instructions qui, lorsqu'elles sont exécutées, amènent au moins un processeur à réaliser le procédé selon l'une quelconque des revendications 1 à 6.

13. Support non transitoire lisible par ordinateur selon la revendication 12, dans lequel l'interface comprend un élément parmi :
une interface affichée sur un ordinateur ;
une interface affichée sur une tablette ;
une interface affichée sur un smartphone ;
une interface affichée sur une montre ;
une interface affichée sur un dispositif de réalité augmentée ; et
un flux de texte.
